# EUROPEAN PATENT APPLICATION

(11) **EP 2 999 159 A1**
(43) Date of publication of application: **23.03.2016**
(21) Application number: 14797382.0
(22) Date of filing: 16.05.2014
(51) Int. Cl.: H04L 9/32

(54) **SAFETY CONTROL METHOD FOR CLOUD STORAGE**

(30) Priority: 17.05.2013 CN 201310186144
(71) Applicant: Tianjin Sursen Investment Corp Ltd., Tianjin 300308 (CN)
(72) Inventor: DONGLIN, Wang, Tianjin 300308 (CN)
(74) Representative: Walsh, Marie Goretti
(86) International application number: PCT/CN2014/077686
(87) International publication number: WO 2014/183671

(57) **Abstract**

A method for controlling security of cloud storage is developed to solve the problem in the prior art that the private key has a low security since the provider of the cloud storage service needs to control the private key in the case of sharing storage. The method comprises: encrypting a private key assigned to a user with two different encryption modes to obtain a first key and a second key and storing the first key and the second key; receiving an answer to a security question inputted by the user when decrypting the first key with a user password fails, and decrypting the second key with the answer to the security question to obtain the private key; and resetting the user password, encrypting the private key obtained by decryption with the answer to the security question to obtain a new first key.

## Description

### TECHNICAL FIELD

The present disclosure relates to the field of cloud storage, and more particularly to a method for controlling security of cloud storage.

### BACKGROUND

With the development of technology, cloud storage has been used more and more widely and a variety of cloud storage technology have been developed. In order to ensure security of cloud storage data, various encryption methods are used, for example, encryption using asymmetric keys. In encryption using asymmetric keys, different keys are used to perform encryption operation and decryption operation respectively. A key is open to public and thus is referred as a public key, and the other is kept secret by users and thus is referred as a private key. The sender of information encrypts the information with the public key, and the receiver of the information decrypts the information with the private key.

In this process, the inventor of this invention found that the security of the private key is not high since the private key needs to be controlled by the provider of the cloud storage service when storage data is shared in the cloud storage.

### BRIEF DESCRIPTION OF DRAWINGS

FIG. 1 is a flowchart of a storing method according to an embodiment of the present invention.
FIG. 2 is a flowchart of a storing method according to another embodiment of the present invention.
FIG. 3 is a flowchart of a storing method according to still another embodiment of the present invention.

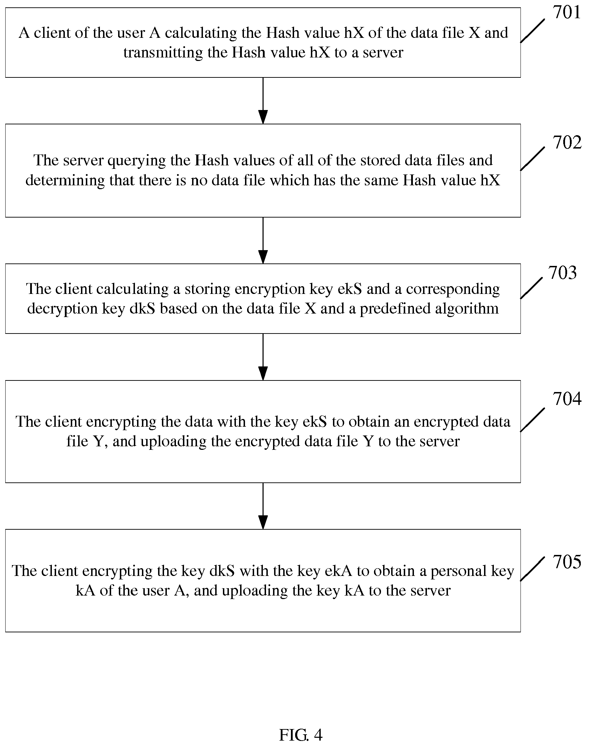

FIG. 4 is a flowchart of a storing method according to still another embodiment of the present invention.
FIG. 5 is a flowchart of a storing method according to still another embodiment of the present invention.
FIG. 6 is a schematic diagram showing a structure of a storing system according to an embodiment of the present invention.
FIG. 7 is a schematic diagram showing a structure of a storing system according to another embodiment of the present invention.
FIG. 8 is a flowchart of a method for controlling security of cloud storage according to an embodiment of the present invention.
FIG. 9 is a flowchart of a method for controlling security of cloud storage according to another embodiment of the present invention.

### DETAILED DESCRIPTION

This invention will be described in detail hereinafter with reference to the specific embodiments in conjunction with the accompanying drawings. It should be understood that the specific embodiments described herein only serve to explain the present invention and are not intended to limit the present invention.

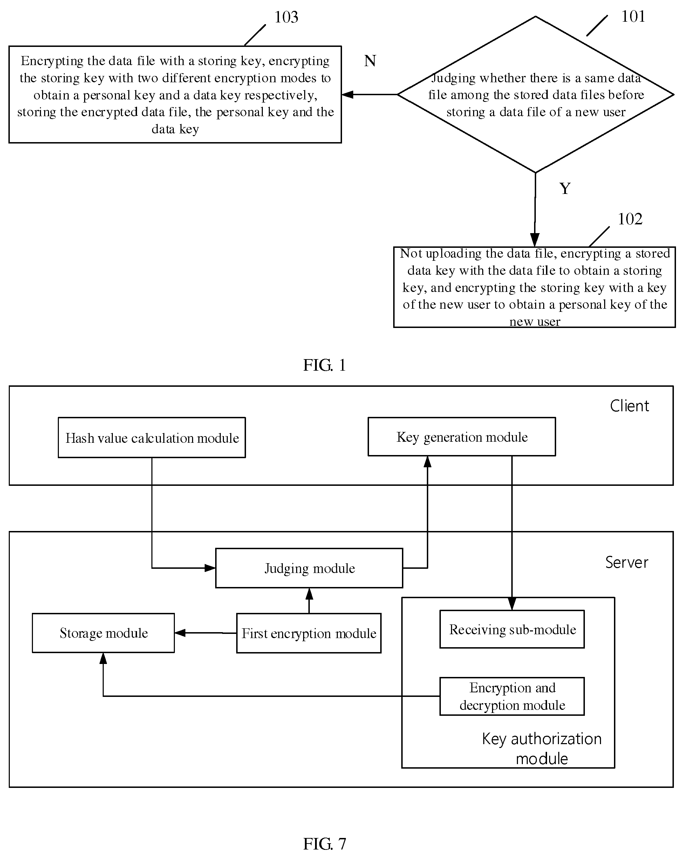

FIG. 1 is a flowchart of a storing method according to an embodiment of the present invention. In this embodiment, a storing key is used to encrypt a data file, and the storing key is encrypted with two different encrypting modes, so that a personal key and a data key are obtained. When the personal key is decrypted with a key of the user who owns the data file as a decryption key, the storing key can be obtained. When the data key is decrypted with the date file before encryption as a decryption key, the storing key can be obtained also. The data file after encryption, the personal key and the data key are stored. The method specifically includes the steps as follows:
Step 101: judging whether there is a same data file among the stored data files before storing a data file of a new user; if so, going to step 102, otherwise going to step 103; and
Step 102: not uploading the data file, encrypting a stored data key with the data file to obtain a storing key, and encrypting the storing key with a key of the new user to obtain a personal key of the new user; or
Step 103: encrypting the data file with a storing key, encrypting the storing key with two different encryption modes to obtain a personal key and a data key respectively, storing the encrypted data file, the personal key and the data key.

Before a certain new user uploads a data file, a server will firstly judge whether there is a data file which is the same as the data file to be uploaded in the cloud storage. If so, a stored data key will be decrypted with the data file of the user to obtain a storing key, then the storing key will be encrypted with a key of the user to obtain a personal key. When accessing the data file in the future, the user can provide the key of the user only to obtain the storing key by decrypting the personal key with the key of the user and then obtain the plaintext data file using the storing key. In this way, repeatedly storing of the data file in the cloud storage is prevented and it is ensured that the provider of the cloud storage service is not capable of obtaining the plaintext data file.

Those skilled in the art will appreciate that a certain user may upload a same data file again. In this case, after it is determined by a server that the data file has been uploaded by the same user, no actions will be taken.

In an embodiment of this invention, the server judges whether a certain data file is a duplicate data file based on the Hash value of the data file. That is, if two data files have the same Hash value, they will be considered as the same. Therefore, the server saves the Hash values of all data files. Before storing a data file, the Hash value of the data file to be uploaded is calculated and then provided to the server which judges whether there is a duplicate data file based on the Hash value. However, this invention is not limited thereto, instead, it will be understood that other methods can be used by those skilled in the art to judge whether there is a duplicate data file.

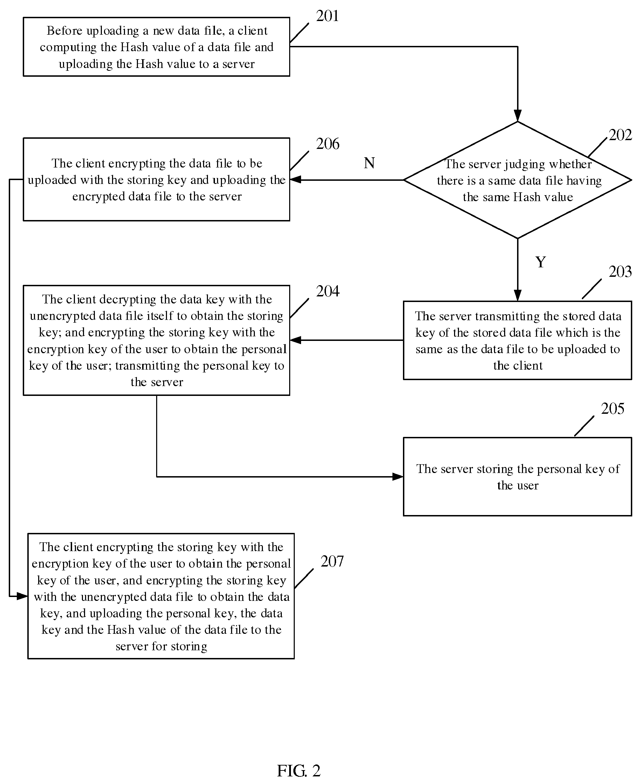

In another embodiment of this invention, a client exists at the user side. After determining that there is a duplicate data file among the stored data files, the server transmits the data key to the client. The client decrypts the data key with the data file before encryption as the decryption key to obtain the storing key, and encrypts the storing key with the key of the user to obtain the personal key of the user. Then the client transmits the personal key of the user to the server for storing. FIG. 2 shows an embodiment of this case.

FIG. 2 is a flowchart of a storing method according to another embodiment of the present invention. In this embodiment, the Hash values are used to identify duplicate data files, the personal key of the user is obtained by encrypting the storing key with an encryption key of the user, and the storing key is obtained by decrypting the personal key with a decryption key of the user. Here, the encryption key of the user may be a public key of the user, and the decryption key of the user may be a private key of the user. In addition, the data key is obtained by symmetrically encrypting the storing key with the data file itself. As shown in FIG. 2, the method specifically includes the steps as follows:
Step 201: before uploading a new data file, the client computing the Hash value of the data file and uploading the Hash value to the server;
Step 202: the server judging whether there is a same data file having the same Hash value among the stored data files; if so, going to step 203, otherwise going to step 206;
Step 203: the server transmitting the stored data key of the stored data file which is the same as the data file to be uploaded to the client;
Step 204: the client decrypting the data key with the unencrypted data file itself to obtain the storing key; and encrypting the storing key with the encryption key of the user to obtain the personal key of the user; transmitting the personal key to the server;
Step 205: the server storing the personal key of the user; the client not uploading the data file and this process ending;
Step 206: the client encrypting the data file to be uploaded with the storing key and uploading the encrypted data file to the server;
Step 207: the client encrypting the storing key with the encryption key of the user to obtain the personal key of the user, and encrypting the storing key with the unencrypted data file to obtain the data key, and uploading the personal key, the data key and the Hash value of the data file to the server for storing, this process ending.

In step 207, the Hash value of the data file is stored for next comparison. In the future, when the user wants to access his or her data file, the personal key is decrypted with the decryption key of the user to obtain the storing key, and the encrypted data file is decrypted with the storing key to obtain the plaintext data file.

With the above technical solution, not only the same data file is not stored repeatedly, but also the same data file is not uploaded repeatedly. In addition, only the user who owns the plaintext data file is capable of obtaining the storing key and accessing the data file, and the provider of the cloud storage service and other users cannot obtain the storing key, which further improves data security compared with the prior art.

In an embodiment of this invention, the client downloads the encrypted data file and the personal key from the server, decrypts the personal key to obtain the storing key, and decrypts the encrypted data file with the storing key to obtain the plaintext data file. In this embodiment, it is ensured that the server is capable of obtaining neither the storing key nor the plaintext data file. In another embodiment of this invention, the server decrypts the personal key to obtain the storing key, decrypts the encrypted data file with the storing key to obtain the plaintext data file, deletes the storing key, and deletes the plaintext data file after usage. In this way, not only the plaintext data file can be used to encrypt the storing key to obtain the data key or decrypt the data key to obtain the storing key, but also the key generated by using the plaintext data file can be used to encrypt the storing key to obtain the data key or decrypt the data key to obtain the storing key.

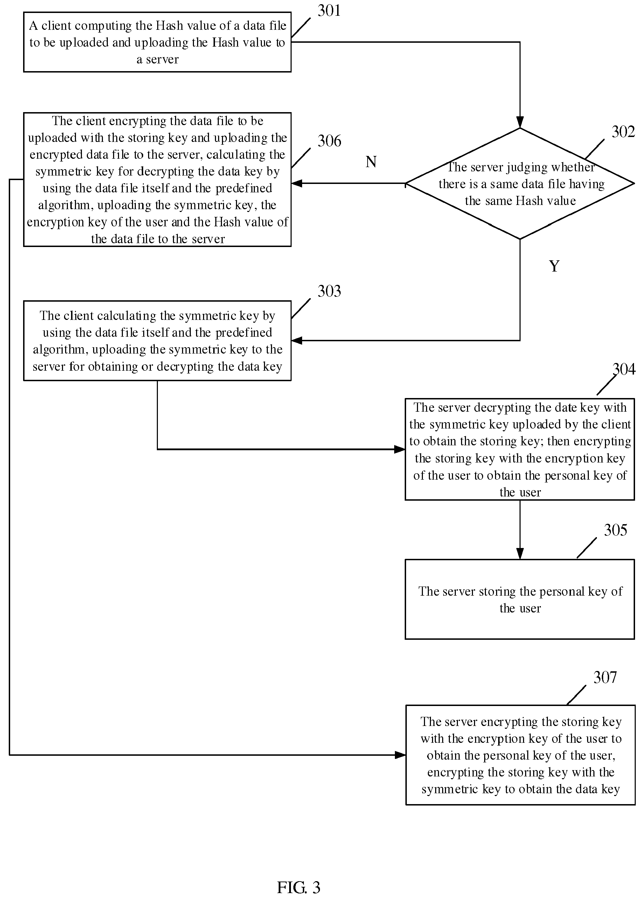

In still another embodiment of this invention, after determining that there is a same data file among the stored data files, the server informs the client. The client calculates a decryption key for decrypting the data key by using the data file itself and a predefined algorithm, and transmits the decryption key to the server. The server decrypts the data key with the decryption key uploaded by the client to obtain the storing key, and then encrypts the storing key with the key of the user to the personal key of the user. FIG. 3 shows an embodiment of this case.

FIG. 3 is a flowchart of a storing method according to still another embodiment of the present invention. In this embodiment, a symmetric key for generating the data key is calculated by using the data file itself and a predefined algorithm. In an embodiment of the present invention, the algorithm for generating the key can be provided at both the server and the client. As shown in FIG. 3, the method specifically includes the steps as follows:
Step 301: before uploading a new data file, the client computing the Hash value of the data file to be uploaded and uploading the Hash value to the server;
Step 302: the server judging whether there is a same data file having the same Hash value among the stored data files; if so, going to step 303, otherwise going to step 306;
Step 303: the client calculating the symmetric key by using the data file itself and the predefined algorithm, uploading the symmetric key to the server for obtaining or decrypting the data key;
Step 304: the server decrypting the date key with the symmetric key uploaded by the client to obtain the storing key; then encrypting the storing key with the encryption key of the user to obtain the personal key of the user;
Step 305: the server storing the personal key of the user; the client not uploading the data file and this process ending;
Step 306: the client encrypting the data file to be uploaded with the storing key and uploading the encrypted data file to the server, calculating the symmetric key for decrypting the data key by using the data file itself and the predefined algorithm, uploading the symmetric key, the encryption key of the user and the Hash value of the data file to the server;
Step 307: the server encrypting the storing key with the encryption key of the user to obtain the personal key of the user, encrypting the storing key with the symmetric key to obtain the data key, and this process ending.

With this embodiment, it is ensured that the same data file is neither stored repeatedly nor uploaded repeatedly. In this embodiment, while the provider of the storage service can obtain the storing key in a short term, the security is greatly improved compared with the prior art in which the storing key is stored in the server in a long term.

In one embodiment of this invention, the algorithm for generating the symmetric key used to generate the data key by suing the data file itself may be calculating the symmetric key used to generate the data key by extracting data at specific positions of the data file or by calculating a special Hash value of the data file.

In another embodiment of this invention, there is no dedicated client, instead the user uploads the data file through a Web browser. In this case, it is difficult for the user to calculate the Hash value of the data file and transmit the Hash value to the server. To address this issue, the server needs obtaining the plaintext data file initially, and then follows the processing of the above-described embodiment: calculating the Hash value, judging whether there is a same data file, decrypting the data key with the data file itself to obtain the encryption keys, and then encrypting the encryption key with the encryption key of the user to obtain the personal key. Once these steps are finished, the server deletes the storing key and the plaintext data file. Although repeated uploading is not avoided with this method, repeated storing is reduced.

In all of the above embodiments, the storing key can be a randomly generated key, so it can be ensured that the storing key is always new and not known by others.

In the above embodiments, only one storing key is used to encrypt the data file to be uploaded and decrypt the encrypted data file to obtain the plaintext data file. In another embodiment of the invention, one storing encryption key is used to encrypt the data file to be uploaded to obtain the encrypted data file, while one storing decryption key is used to decrypt the encrypted data file to obtain the plaintext data file. The storing encryption key is different from the storing decryption key. In this case, the storing decryption key is encrypted with different methods to obtain the data key and the personal key respectively.

The key used to encrypt the storing key to obtain the data key and/or the key used to decrypt the data key to obtain the storing key are associated with the data file to be uploaded. In the above embodiments, the key may be the data file itself to be uploaded, or may be calculated by using the data file to be uploaded and a predefined algorithm. Similarly, in a certain embodiment, the key may be determined based on the data file to be uploaded and other data. For example, the key may be a combined Hash value determined by calculating the data file to be uploaded and data shared with a related user. Generally, it is difficult to obtain the key used to decrypt the data key to obtain the storing key without use of the plaintext data file.

In an embodiment of this invention, the key used to encrypt the storing key to obtain the data key and the key used to decrypt the data key to obtain the storing key are different. The algorithm for encryption/decryption may be a symmetric algorithm or a non-symmetric algorithm. For example, asymmetric keys can replace the symmetric keys in the embodiment shown in FIG. 3.

The keys in the above-described embodiments, including the key used to encrypt the data file and/or the key used to decrypt the data file, the key used to generate the personal key with encryption and/or the key used to decrypt the personal key, the key used to generate the data key with encryption and/or the key used to decrypt the data key, can be asymmetric public/private key pairs or symmetric key pairs.

In the above embodiments, each step for encryption or decryption can be performed by either the server or the client. For example, if it is described that a certain step for encryption is performed by the server, those skilled in the art will appreciate that the step can be performed by the client, and vice versa. For example, step 206 may be: the client uploading the unencrypted data file to the server, then the server encrypting the data file with the storing key. Another example, step 303 and step 304 may be: " Step 303: the client calculating the symmetric key by using the data file itself and the predefined algorithm; Step 304: the client decrypting the date key with the symmetric key to obtain the storing key; then encrypting the storing key with the encryption key of the user to obtain the personal key of the user, transmitting the personal key to the server." If in a certain embodiment, the server obtains the plaintext data file or the storing key in a short time and deletes the same after usage, those killed in the art will appreciate that the security will be improved if the operations relating to the plaintext data file or the storing key are performed by the client.

In an embodiment of this invention, a user A has an encryption key ekA and a corresponding decryption key dkA, a user B has an encryption key ekB and a corresponding decryption key dkB. When the user A uploads a data file X which has not been stored, the method comprises the steps of:
Step 401: a client of the user A calculating the Hash value hX of the data file X and transmitting the Hash value hX to a server;
Step 402: the server querying the Hash values of all of the stored data files and determining that there is no data file which has the same Hash value hX;
Step 403: the client encrypting the data file X with a storing encryption key to obtain the encrypted data file Y, and transmitting the data file Y to the server;
Step 404: the client calculating the encryption key ekX by using the data file X and a predefined algorithm, encrypting a storing decryption key dkS which is corresponding to the storing encryption key ekS with the key ekX to obtain a data key kX, and transmitting the key kX to the server;
Step 405: the client encrypting the key dkS with the key ekA to obtain a personal key kA of the user A, and transmitting the key kA to the server;
Step 406: the server storing the Hash value hX, the data file Y, the key kX and the key kA.

In another embodiment, steps 403 to 405 may be:
Step 403: the client uploading the data file X to the server;
Step 404: the server encrypting the data file X with a storing encryption key ekS to obtain the encrypted data file Y, and calculating the encryption key ekX by using the data file X and a predefined algorithm, encrypting a storing decryption key dkS which is corresponding to the storing encryption key ekS with the key ekX to obtain a data key kX, and encrypting the key dkS with the key ekA to obtain a personal key kA of the user A;
Step 405: the server deleting the data file X and the key dkS.

When the user B wants to upload the data file X which has been stored, the method further comprises:
Step 501: a client of the user B calculating the Hash value hX of the data file X and transmitting the Hash value hX to a server;
Step 502: the server querying the Hash values of all of the stored data files and determining that there is a data file which has the same Hash value hX;
Step 503: the server transmitting the data key kX of the data file X to the client;
Step 504: the client calculating the decryption key dkX based on the data file X of the client and a predefined algorithm, decrypting the decryption key kX with the key dkX to obtain the key dkS, encrypting the key dkS with the personal key ekB of the user B to obtain the personal key kB of the user B, and transmitting the key kB to the server;
Step 505: the server storing the key kB.

When the user A wants to access the data file X in the future, the method further comprises:
Step 601: the server transmitting the encrypted data file Y and the personal key of the user A to the client of the user A;
Step 602: the client decrypting the key kA with the decryption key dkA of the user A to obtain the key dkS;
Step 603: The client decrypting the encrypted data file Y with the key dkS to obtain the plaintext data file X.

In an embodiment of this invention, the keys ekA and dkA may be the same or different, the keys ekB and dkB may be the same or different, the keys ekS and dkS may be the same or different, and the keys ekX and dkX may be the same or different. The keys eKS and dkS may be randomly generated.

In an embodiment of this invention, the keys ekA, dkA, ekB and dkB can be stored in the client or the server. In an embodiment of this invention, the keys ekA and ekB are public keys and stored in both the client and the server, while the keys dkA and dkB are private keys and stored only in the client.

In the above description, although both of the client of the user A and the client of the user B are mentioned and it is described that they have different functions, those skilled in the art will appreciate that a client can have the functions of both of the two clients.

In an embodiment of this invention, the storing key ekS can be calculated based on the data file to be uploaded. In this case, the keys ekX, dkX and kX are not required.

In an embodiment of this invention, a user A has an encryption key ekA and a corresponding decryption key dkA, a user B has an encryption key ekB and a corresponding decryption key dkB. When the user A uploads a data file X which has not been stored, the method comprises the steps of:
Step 701: a client of the user A calculating the Hash value hX of the data file X and transmitting the Hash value hX to a server;
Step 702: the server querying the Hash values of all of the stored data files and determining that there is no data file which has the same Hash value hX;
Step 703: the client calculating a storing encryption key ekS and a corresponding decryption key dkS based on the data file X and a predefined algorithm;
Step 704: the client encrypting the data with the key ekS to obtain an encrypted data file Y, and uploading the encrypted data file Y to the server;
Step 705: the client encrypting the key dkS with the key ekA to obtain a personal key kA of the user A, and uploading the key kA to the server.

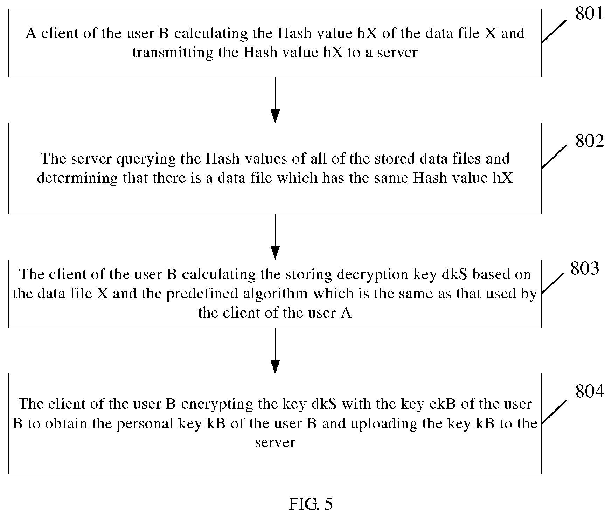

The server stores the Hash value hX, the encrypted data file Y and the key kA. When the user B uploads the data file X which has been uploaded by the user A, as shown in FIG. 5, the method further comprises:
Step 801: a client of the user B calculating the Hash value hX of the data file X and transmitting the Hash value hX to a server;
Step 802: the server querying the Hash values of all of the stored data files and determining that there is a data file which has the same Hash value hX;
Step 803: the client of the user B calculating the storing decryption key dkS based on the data file X and the predefined algorithm which is the same as that used by the client of the user A;
Step 804: the client of the user B encrypting the key dkS with the key ekB of the user B to obtain the personal key kB of the user B and uploading the key kB to the server.

The server stores the key kB.

Since the data file X is not random, it is required that the predefined algorithm used to generate the storing encryption key and the decryption key makes the generated keys as random as possible. In an embodiment of this invention, the predefined algorithm can be: calculating a Hash value of a combination of the data file X and a predefined character string, or encrypting the data file X with a predefined character string and then calculating the Hash value of the encrypted data file X.

When the user A or the user B wants to access the data file X, the key dkA or the key dkB are used to decrypt the key kA or the key kB respectively to obtain the key dkS, and then the key dkS is used to decrypt the encrypted data file Y to obtain the data file X.

Those skilled in the art will appreciate that the steps performed by the client of the user A and those performed by the client of the user B can be performed by a same client. When a user uses the client to upload the data file which has not been stored, the steps performed by the client of the user A as described above will be performed. When the user uses the client to upload the data file which has been stored, the steps performed by the client of the user B as described above will be performed. In this case, the user A and the user B may be a same user.

In an embodiment of this invention, when the user A uploads a data file which has not been stored in the server, the storing method of the client of the user A comprises:
calculating the storing encryption key ekS and the corresponding decryption key dkS based on the data file X and the predefined algorithm;
encrypting the data file X with the key ekS to obtain the encrypted data file Y, and transmitting the encrypted data file Y to the server;
encrypting the key dkS with the key ekA to obtain the personal key kA of the user A, and transmitting the key kA to the server.

When the user A uploads a data file which has been stored in the server, the storing method of the client of the user A comprises:
calculating the storing decryption key dkS based on the data file X and the predefined algorithm;
encrypting the key dkS with the key ekA of the user A to obtain the personal key kA of the user A, and transmitting the key kA to the server.

In this case, assuming that the encrypted data file Y is uploaded by the user B, besides the encrypted data file Y, the server stored the key kB. Here, the encrypted data file Y and the key kB are obtained by the following steps:
calculating the storing encryption key ekS and the corresponding decryption key dkS based on the data file X and the same predefined algorithm;
encrypting the data file X with the key ekS to obtain the encrypted data file Y, and transmitting the encrypted data file Y to the server;
encrypting the key dkS with the key ekB to obtain the personal key kB of the user B, and transmitting the key kB to the server.

In an embodiment of this invention, when the user A uploads the data file X to the server, a storing method comprises:
calculating the Hash value hX of the data file X;
transmitting the Hash value hX to the server;
receiving a comparison result from the server, the comparison result indicating whether there is the same data file as the data file X among the stored data files;
when the comparison result indicates that there is no data file which is the same as the data file X among the stored data files, calculating the storing encryption key ekS and the corresponding decryption key dkS based on the data file X and the predefined algorithm;
encrypting the data file X with the key EkS to obtain the encrypted data file Y and uploading the encrypted data file Y to the server;
encrypting the key dkS with the key ekA of the user A to obtain the personal key kA of the user A and uploading the key ekA to the server;
when the comparison result indicates that there is the same data file as the data file X among the stored data files, calculating the storing decryption key dkS based on the data file X and the predefined algorithm;
encrypting the key dkS with the key ekA of the user A to obtain the personal key kA of the user A and uploading the key ekA to the server.

Those skilled in the art will appreciate that the above method is performed at the client, in practical applications, it can be performed by software or hardware in the client.

In an embodiment of this invention, when the user A uploads the data file X to the server, a storing method comprises:
obtaining the Hash value hX of the data file X;
comparing the Hash value hX with the Hash values of stored data files;
transmitting the comparison result to the client;
if the comparison result indicates that none of the stored data files has the Hash value hX, receiving the encrypted data file Y uploaded by the client; wherein the client calculates the storing encryption key ekS and the corresponding decryption key dkS based on the data file X and a predefined algorithm and encrypts the data file X with the key ekS to obtain the encrypted data file Y;
receiving the personal key kA of the client user A uploaded by the client, wherein the client encrypts the key dkS with the key ekA of the user A to obtain the personal key kA;
if the comparison result indicates that a certain stored data file has the same Hash value hX, receiving the personal key kA of the user A uploaded by the client, wherein the client encrypts the key dkS with the key ekA of the user A to obtain the personal key kA .

Those skilled in the art will appreciate that the above method is performed at the client, in practical applications, it can be performed by software or hardware in the client.

In an embodiment of this invention in, the keys dkS and ekS or the keys ekA and dkA are a pair of symmetric keys, or are asymmetric keys.

In an embodiment of this invention, a storing system comprising a server is provided. The server comprises:
a first encryption module, configured to encrypt a data file with a storing key, and encrypt the storing key with two different modes to obtain a personal key and a data key respectively; decrypting the personal key with a key of a user who owns the data file as a decryption key obtaining the storing key, and decrypting the data key with the data file before encryption as a decryption key obtaining the storing key;
a storage module, configured to store the encrypted data file, the personal key and the data key;
a judging module, configured to judge whether there is a same data file among the stored data files before storing the data file of the user, and inform the first encryption module if there is no the same data file in the stored data files, otherwise inform a key authorization module;
a key authorization module, configured to decrypt the data key with the data file to obtain the storing key when there is the same data file among the stored data files, and encrypt the storing key with the key of the user to obtain the personal key of the user.

Another embodiment of this invention provides a server that includes a first encryption module, a storage module and a key authorization module, and further includes a client. The client comprises:
a decryption module, configured to receive the data key transmitted from the server, and decrypt the data key with the data file before encryption as the decryption key;
a second encryption module, configured to encrypt the storing key with the key of the user to obtain the personal key of the user, and transmit the personal key of the user to the server.

In this case, the key authorization module of the server includes:
a transmitting sub-module, configured to transmit the data key to the client when the judging result of the judging module is positive;
a receiving sub-module, configured to receive the personal key of the user from the client and transmit the personal key of the user to the storage module for storing.

In an embodiment of this invention, the server further includes a deletion module configured to delete the unencrypted data file and the storing key in time after completion of usage of them.

In an embodiment of this invention, the first encryption module is in the client.

In an embodiment of this invention, the first encryption module is further configured to generate the storing key randomly before using the storing key to perform encryption.

In another embodiment of this invention, the client includes:
a key generation module, configured to calculate the key used to decrypt the data key based on the data file itself and a predefined algorithm when the judging result of the judging module is positive, and transmit the key to the server.

In this case, the key authorization module of the server includes:
a receiving sub-module, configured to receive the key which is used to decrypt the data key and is calculated based on the data file itself and the predefined algorithm;
an encryption and decryption sub-module, configured to decrypt the data key with the decryption key uploaded by the client to obtain the storing key, and encrypt the storing key with the key of the new user to obtain the personal key of the new user.

In another embodiment of this invention, the client may further comprise:
a Hash value calculation module, configured to calculate the Hash value of the data file of the new user, transmit the Hash value to the server for the judging module of the server to judge whether there is a data file having the same Hash value as the data file among the stored data files.

Hereinafter two specific embodiments are taken as examples to describe the storing system.

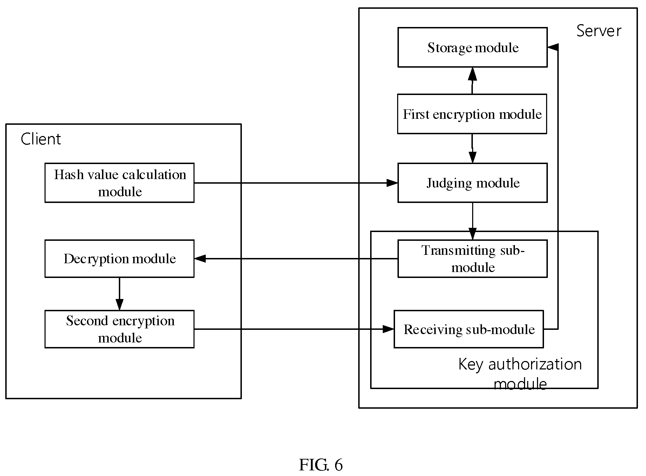

FIG. 6 is a schematic diagram showing a structure of a storing system according to an embodiment of the present invention. As shown in FIG. 6, the system includes a client and a server. The client includes a Hash value calculation module, a decryption module and a second encryption modules, and the server includes a first encryption module, a storage module, a judging module and a key authorization module including a transmitting sub-module and a receiving sub-module.

The functions and purposes of the modules can be referred to the above described embodiments.

In another embodiment of this invention, there is no client at the user side, thus all of the above-described modules are located in the server.

FIG. 7 is a schematic diagram showing a structure of a storing system according to another embodiment of the present invention. As shown in FIG. 7, the system includes a client and a server.

The client includes a Hash value calculation module and a key generation module. The server includes a first encryption module, a storage module, a judging module and a key authorization module including a transmitting sub-module and a receiving sub-module.

The functions and purposes of the modules can be referred to the above described embodiments.

In another embodiment of this invention, there is no client at the user side, thus all of the above-described modules are located in the server.

Another embodiment of this invention also provides a storage device which is the server described above.

An embodiment of this invention also provides a storing client, including:
a first module, configured to encrypt the data file X with the storing encryption key ekS to obtain the encrypted data file Y;
a second module, configured to encrypt the decryption key dkS corresponding to the key ekS with the encryption key ekA of the user A to obtain the personal key kA of the user A, and encrypt the key dkS with the encryption key ikX relating to the data file X to obtain the data key kX of the data file X;
a third module, configured to transmit the encrypted data file Y, the keys kA and kX to the server.

The client further comprises:
a fourth module, configured to calculate the decryption key dkX corresponding to the key ekX based on the data file X when a user B having an encryption key ekB and a corresponding decryption key dkB wants to store the data file X again, decrypt the key kX with the key dkX to obtain the key dkS, and encrypt the key dkS with the key ekB to obtain a personal key kB of the user B;
a fifth module, configured to transmit the key kB to the server for storing..

In an embodiment of this invention, the client further comprises:
a sixth module, configured to decrypt the key kA with the key dkA to obtain the key dkS when the user A accesses the data file X, and decrypt the encrypted data file Y with the key dkS to obtain the data file X.

Those skilled in the art will appreciate that, although in the above description the client handles the requests to upload data by both of the user A and the user B, if the client is at a single user side such as user A side, the fourth module and the fifth module may be described as follows:
a fourth module, configured to calculate the decryption key dkX' corresponding to the key ekX' based on the data file X' when the user A wants to store the data file X' again which has been stored in the server (the key kX' corresponding to the data file X' has been stored in the server), calculate the decryption key dkX' corresponding to the key ekX' based on the data file X', decrypt the key kX' of the data file X' with the key dkX' to obtain the key dkS', encrypt the key dkS' with the key ekA to obtain the personal key kA' corresponding to the data file X' of the user A;
a fifth module, configured to transmit the key kA' to the server for storing.

An embodiment of this invention also provides a storing system, comprising:
a seventh module, configured to encrypt a data file with a storing key;
an eighth module, configured to encrypt the storing key with two different modes to obtain a personal key and a data key respectively; decrypting the personal key with a key of a user who owns the data file as a decryption key obtaining the storing key, and decrypting the data key with the data file before encryption as a decryption key obtaining the storing key;
a ninth module, configured to store the encrypted data file, the personal key and the data key;
a tenth module, configured to decrypt the data key of the data file which has been stored with the unencrypted data file to be uploaded by the user to obtain the storing key when the data file to be uploaded by the user is the same as a certain data file among the stored data files, and encrypt the storing key with the key of the user to obtain the personal key of the user.

In an embodiment of this invention, the seventh module, the eighth module and the ninth module are disposed in the client, the tenth module is disposed in the server. In this case, the client further comprises:
an eleventh module, configured to receive the personal key of the user when the user wants to access his or her data file, decrypt the personal key with the key of the user to obtain the storing key, and decrypt the encrypted data file with the storing key to obtain the data file.

In an embodiment of this invention, the seventh module is disposed in the client, the eighth module, the ninth module and the tenth module are disposed in the server. In this case, the client further comprises:
a twelfth module, configured to calculate the encryption key for encrypting the storing key to obtain the data key based on the data file itself and a predefined algorithm, transmitting the encryption key and the key of the user to the server.

At this time, the eighth module is configured to encrypt the storing key with the encryption key and the key of the user to obtain the personal key and the data key respectively.

The tenth module may comprise:
a first sub-module, configured to receive the encryption key which is used for encrypting the storing key to obtain the data key and is calculated based on the data file itself and the predefined algorithm;
a second sub-module, configured to decrypt the data key with the decryption key uploaded by the client to obtain the storing key, and encrypt the storing key with the key of the user to obtain the personal key of the user.

In another embodiment of this invention, the seventh module, the eighth module, the ninth module and the tenth module are disposed in the server.

In an embodiment of this invention, the server further comprises:
a twelfth module, configured to judge whether the data file to be uploaded by the user is the same as a certain data file among the stored data files.

The present invention further provides a storing device, which can be the server described above or the client described above.

Those skilled in the art will appreciate that the storing method, the server and the client according to embodiments of the present invention can be disposed in a stand-alone device, such as a PC, a stand-alone server, or they can be disposed in a distributed system or a system having another structure.

The storing method, the system, the server and the client according to the above embodiments are only described as examples, features in each embodiment can be combined to form new embodiments, and the new embodiments are included in the scope of this invention.

In a method for controlling security of cloud storage according to an embodiment of this invention, after a user registers a system, the user is required to input a user password to log in the system. In addition, some security questions are provided to the user, the user can select one security question and set a corresponding answer. The answer to the security question and the user password are used to encrypt a user key to obtain two user cipher texts. In most cases, the user password inputted by the user is used to decrypt one corresponding user cipher text to obtain the user key. If the user forgets the user password, the answer to the security question can be used to decrypt another corresponding user cipher text to obtain the user key, and then the user may reset the user password and the reset user password is used to encrypt the user key.

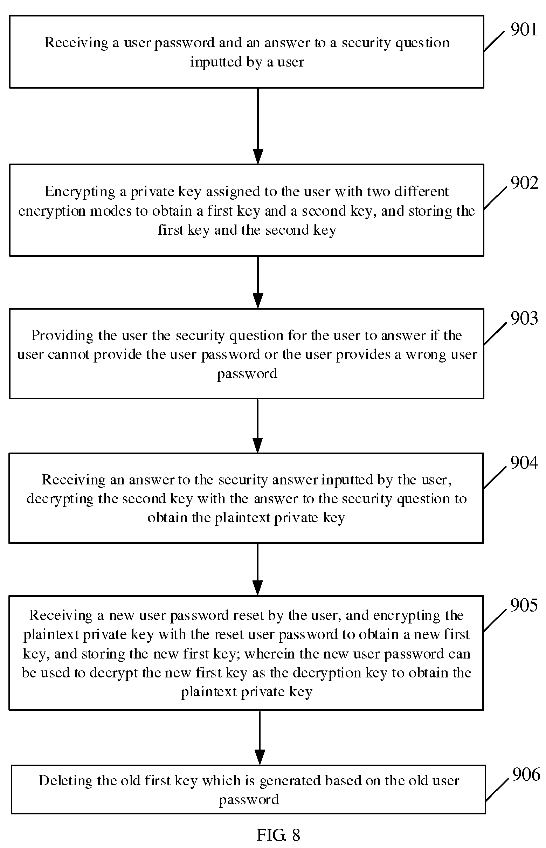

FIG. 8 shows a flowchart of a method for controlling security of cloud storage according to an embodiment of the present invention. As shown in FIG. 8, the method comprises the steps of:
Step 901: receiving a user password and an answer to a security question inputted by a user;
Step 902: encrypting a private key assigned to the user with two different encryption modes to obtain a first key and a second key, and storing the first key and the second key;
wherein the user password can be used to decrypt the first key as the decryption key to obtain the plaintext private key, and the answer to the security question can be used to decrypt the second key as the decryption key to obtain the plaintext private key;
Step 903: providing the user the security question for the user to answer if the user cannot provide the user password or the user provides a wrong user password;
Step 904: receiving an answer to the security answer inputted by the user, decrypting the second key with the answer to the security question to obtain the plaintext private key;
Step 905: receiving a new user password reset by the user, and encrypting the plaintext private key with the reset user password to obtain a new first key, and storing the new first key; wherein the new user password can be used to decrypt the new first key as the decryption key to obtain the plaintext private key;
Step 906: deleting the old first key which is generated based on the old user password.

In an embodiment of this invention, all of the above steps are performed at the client. That is, when it is required to decrypt the data file with the private key of the user, the server transmits the first key or the second key to the client which will decrypt the first key or the second key, and transmits the encrypted data file to the client. The client decrypts the data file with the decrypted private key and shows the decrypted data file to the user. In the whole procedures, the server is not capable of accessing the decrypted private key and the plaintext data file.

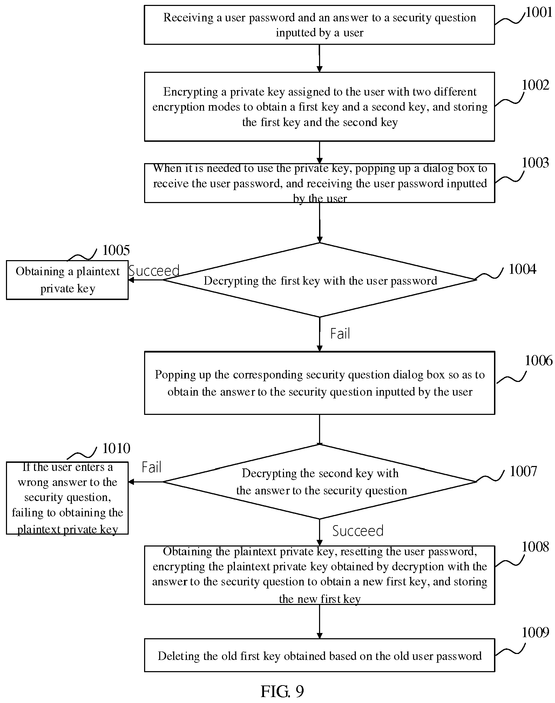

In order to enable those skilled in the art to better understand the method for controlling security of cloud storage according to embodiments of the present invention, a method according to another embodiment of this invention will be described in detail hereinafter. As shown in FIG. 9, a method for controlling security of cloud storage according to another embodiment of this invention comprises the steps as follows.

At step 1001, a user password and an answer to a security question inputted by a user is received.

In one embodiment of this invention, when the user registers the system, an initial user password to log in the system can be provided. Meanwhile, some security questions may be provided to the user for selection, and the user may set an answer to a selected security question.

At step 1002, a private key assigned to the user is encrypted with two different encryption modes to obtain a first key and a second key, and the first key and the second key are stored.

Here, the user password can be used to decrypt the first key as the decryption key to obtain the plaintext private key, and the answer to the security question can be used to decrypt the second key as the decryption key to obtain the plaintext private key.

At step 1003, when it is needed to use the private key, a dialog box to receive the user password is popped up, and the user password inputted by the user is received. If the user fails to provide the user password, step 1006 will be implemented, otherwise step 1004 will be implemented.

In an embodiment of this invention, if the dialog box for receiving the user password does not receive any input by the user in a predefined time term, it is assumed that the user fails to provide the user password and a security question dialog box will be popped up automatically. Alternatively, a command button indicating forgetting the user password is set in the user password dialog box, it is assumed that the user fails to provide the user password if the dialog box receives a command indicating that the user clicks the command button indicating forgetting the user password, and then the security question dialog box will be popped up.

At step 1004, the first key is decrypted with the user password, if the decryption is successful, step 1005 is implemented, otherwise step 1006 is implemented.

At step 1005, a plaintext private key is obtained. At this point, the entire process ends.

At step 1006, the corresponding security question dialog box is popped up so as to obtain the answer to the security question inputted by the user.

At step 1007, the second key is decrypted with the answer to the security question, if the decryption is successful, step 1008 is implemented, otherwise step 210 is implemented.

At step 1008, the plaintext private key is obtained, and the user password is reset. The plaintext private key obtained by decryption with the answer to the security question is encrypted to obtain a new first key, and the new first key is stored.

Here, the new user password can be used to decrypt the first key as the decryption key so as to obtain the plaintext private key.

At step 1009, the old first key obtained based on the old user password is deleted. At this point, the entire process ends.

At step 1010, if the user enters a wrong answer to the security question, the plaintext private key cannot be obtained. At this point, the entire process ends.

In an embodiment of this invention, all of the above steps are performed at the client. That is, when it is required to decrypt the data file with the private key of the user, the server transmits the first key or the second key to the client which will decrypt the first key or the second key, and transmits the encrypted data file to the client. The client decrypts the data file with the decrypted private key and shows the decrypted data file to the user. In the whole procedures, the server is not capable of accessing the decrypted private key and the plaintext data file.

In an embodiment of this invention, before the second key is decrypted with the answer to the security question, the method further comprises judging whether the answer to the security question is correct. Specifically, judging whether the answer to the security question is correct may be: obtaining a Hash value of the answer to the security question when the answer is set; comparing the Hash value of the answer inputted by the user with the stored Hash value of the set answer when the user inputs the answer to the question subsequently. In this way, the simple judging replaces the action of decrypting the second key even if the answer to the security question is not correct, which saves the system overhead.

In an embodiment of this invention, the answer to the security question can be set as not case sensitive. Specifically, upon receiving the answer to the security question inputted by the user, the answer will be transformed to uppercase or lowercase no matter the input of the user is uppercase or lowercase, and the transformed answer will be compared with the stored answer to the security question. Alternatively, upon receiving the answer to the security question inputted by the user, the answer will be transformed to all combinations of uppercase characters and lowercase characters. For example, if the user inputs "ab" as the answer to the security question, the answer can be transformed to all combinations of uppercase characters and lowercase characters, i.e. "ab, Ab, AB, aB", and then each of the combinations is compared with the stored answer.

In another embodiment of this invention, a retrieving method for cloud storage which can realize full-text search for a document while ensure that the server cannot access the contents of the data file is provided. The method includes:
extracting keywords of a data file before uploading the data file and forming a keyword combination;
encrypting the data file, transmitting the encrypted data file and the keyword combination of the data file to the server, the server storing the encrypted data file and the keyword combination of the data file to the server;
when a user wants to retrieve, retrieving a keyword sent by the user in the stored keyword combination of the data file and transmitting the retrieved data file to a client so that the client is capable of obtaining the desired data file.

With the above retrieving method, when the server receives a retrieval request relating to keyword retrieval, the server can perform retrieval without the full-text search, that is, the server can perform retrieval without accessing the plaintext data file. In this way, the server will not obtain the plaintext data file according to the stored keyword combination. In addition, with this retrieving method using keywords, the accuracy of retrieval will be improved.

The foregoing is only illustration of preferred embodiments of this invention, and is not intended to limit the present invention. Any modification, equivalent replacement and improvement made within the spirit and principles of the present invention should be included in the scope of the present invention.

## Claims

1. A method for controlling security of cloud storage, which is **characterized in that** the method comprises:
encrypting a private key assigned to a user with two different encryption modes to obtain a first key which is used to obtain the private key through being decrypted with a user password as an decryption key and a second key which is used to obtain the private key through being decrypted with an answer to a security question as the decryption key, and storing the first key and the second key;
receiving the answer to the security question inputted by the user when decrypting the first key with the user password fails, and decrypting the second key with the answer to the security question to obtain the private key; and
resetting the user password, encrypting the private key obtained by decryption with the answer to the security question to obtain a new first key which is used to obtain the private key through being decrypted with the new user password as the decryption key.

2. The method according to claim 1, **characterized in that** the method further comprises:
deleting the first key obtained based on the old user password.

3. The method according to claim 1, **characterized in that** the method is performed at a client.

4. The method according to claim 1, **characterized in that** the method further comprises receiving the user password and the answer to the security question inputted by the user before encrypting a private key assigned to a user with two different encryption modes to obtain a first key and a second key and storing the first key and the second key.

5. The method according to any one of claims 1 to 4, **characterized in that** decrypting the first key with the user password failing includes the user failing to provide the user password or the user providing a wrong user password.

6. The method according to claim 1, **characterized in that** the method further comprises judging whether the answer to the security question is correct before decrypting the second key with the answer to the security question to obtain the private key;
wherein decrypting the second key with the answer to the security question to obtain the private key comprises decrypting the second key with the answer to the security question to obtain the private key if the answer to the security question is correct.

7. The method according to claim 6, **characterized in that** judging whether the answer to the security question is correct comprises: comparing a Hash value of the answer to the security question inputted by the use with a pre-stored Hash value which is set and stored when the user sets the answer to the security question at the first time;
wherein it is determined that the answer to the security question is correct if the Hash value of the answer to the security question inputted by the use is the same as the pre-stored Hash value.

8. The method according to claim 6, **characterized in that** judging whether the answer to the security question is correct comprises:
transforming the answer to the security question to uppercase characters or lowercase characters after receiving the answer to the security question inputted by the user; and
comparing the answer to the security question inputted by the user after transforming with the answer to the security question set by the user at the first time after the same transforming, and determining that the answer to the security question is correct if the two answers match.

9. The method according to claim 6, **characterized in that** judging whether the answer to the security question is correct comprises:
transforming the answer to the security question to all combinations of uppercase characters and lowercase characters after receiving the answer to the security question inputted by the user; and
comparing all combinations of uppercase characters and lowercase characters of the answer to the security question inputted by the user with the answer to the security question set by the user at the first time, and determining that the answer to the security question is correct if one combination matches the answer to the security question set by the user at the first time.
